(19) Europäisches Patentamt
European Patent Office
Office européen des brevets

(11) Numéro de publication: **0 319 398 B1**

(12) # FASCICULE DE BREVET EUROPEEN

(45) Date de publication de fascicule du brevet: **03.03.93**

(51) Int. Cl.[5]: **G21F 9/34**

(21) Numéro de dépôt: **88403001.6**

(22) Date de dépôt: **29.11.88**

(54) **Dispositif de conditionnement de déchets radioactifs ou toxiques dans du ciment, et son procédé de fabrication.**

(30) Priorité: **02.12.87 FR 8716716**

(43) Date de publication de la demande:
**07.06.89 Bulletin 89/23**

(45) Mention de la délivrance du brevet:
**03.03.93 Bulletin 93/09**

(84) Etats contractants désignés:
**BE CH DE ES FR GB LI SE**

(56) Documents cités:
**FR-A- 2 402 632**
**FR-A- 2 432 752**

**CHEMICAL ABSTRACTS, vol. 104, 1986, page 402, résumé no. 155307v, Columbus, Ohio, US; & JP-A-60 235 686 (DAIWA SEKIYU K.K.) 22-11-1985**

**ZEMENT-KALK-GIPS, vol. 34, no. 9, 1981, pages 473-475; W. LIEBER: "Einfluss von anorganischen Borverbindungen auf das Erstarren und Erhärten von Portlandzementen"**

(73) Titulaire: **COMMISSARIAT A L'ENERGIE ATOMIQUE Etablissement de Caractère Scientifique Technique et Industriel**
**31/33, rue de la Fédération**
**F-75015 Paris(FR)**

(72) Inventeur: **Bouniol, Pascal**
**6, rue Eugénie Gérard**
**F-94300 Vincennes(FR)**

(74) Mandataire: **Mongrédien, André et al**
**c/o BREVATOME 25, rue de Ponthieu**
**F-75008 Paris (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.5x/3.0.1)

## Description

La présente invention concerne le traitement en vue du stockage à long terme de déchets radioactifs ou toxiques comportant éventuellement des ions borate.

De façon plus précise, elle se rapporte au conditionnement de tels déchets dans des matrices à base de liant hydraulique constitué par des ciments.

Dans les centrales nucléaires, on utilise souvent pour l'élimination des impuretés apparaissant dans l'eau du circuit primaire, des résines échangeuses d'ions en lits mélangés (anioniques et cationiques. En fin d'opération, les résines usées contiennent essentiellement des produits d'activation dont $^{60}Co$, des traces de produits de fission dont $^{137}Cs$ et un mélange bore-lithium utilisé comme poison neutronique dans l'eau du circuit, sous forme d'un neutralisat $H_3BO_3$-LiOH. Ces résines échangeuses d'ions usées constituent des déchets de moyenne activité ($10^2$ à $10^3$ Ci/m$^3$) compte tenu de leur teneur en $^{60}Co$ et de la période de ce dernier (T = 5,24 ans), qu'il est nécessaire d'enrober en vue de leur stockage jusqu'à disparition de l'activité.

Parmi les procédés de traitement connus actuellement, les procédés consistant à incorporer les déchets dans du ciment sont intéressants en raison de leur coût peu élevé et de leur facilité de mise en oeuvre. Cependant, dans le cas des résines échangeuses d'ions contenant des ions borate, il est difficile d'utiliser ce procédé en raison d'interactions indésirables entre les résines et le mélange de ciment ou de variations dimensionnelles des résines qui remettent en question l'intégrité des enrobés obtenus.

Dans les installations nucléaires, on trouve également parmi les déchets à traiter des concentrats boratés qui sont aussi des déchets de moyenne activité, dont l'incorporation dans du ciment pose aussi certains problèmes.

Pour qu'un procédé de conditionnement de déchets par incorporation dans du ciment soit satisfaisant, il est nécessaire d'obtenir :

- une immobilisation physique des déchets sous une forme non dispersable, c'est-à-dire un blocage dans la matrice de ciment,
- une rétention et un confinement des radionucléides, en particulier des plus labiles comme le $^{137}Cs$,
- une prévention de tout phénomène de lixiviation par l'eau,
- une résistance mécanique du produit obtenu suffisante pour permettre la manutention et résister aux chocs avec une valeur d'au moins 12 MPa après 28 jours selon les spécifications de l'ANDRA,
- une stabilité dimensionnelle du produit obtenu, c'est-à-dire une absence de retrait ou de gonflement significatifs,
- une durabilité correcte de la matrice de ciment vis-à-vis des agressions chimiques et sa propre évolution dans le temps, et
- une protection biologique suffisante pour ne pas dépasser un débit de doses de 200 mrads/h au contact du colis final.

Par ailleurs, il est souhaitable que le procédé permette d'incorporer dans la matrice de ciment une quantité de déchets représentant au moins 50% en volume apparent de l'enrobé obtenu, et que les opérations d'enrobage soient aisées et rapides en ne conduisant pas à l'obtention de nouveaux effluents ou d'une autre contamination.

Lorsqu'on veut incorporer dans du ciment des déchets constitués par des résines échangeuses d'ions contenant des ions borate, il est impossible d'obtenir les résultats mentionnés ci-dessus en raison d'effets néfastes se produisant lors de l'enrobage des déchets et/ou lors du vieillissement du produit enrobé, effets qui sont dus, d'une part, à l'affinité des résines échangeuses d'ions pour l'eau et, d'autre part, à la présence des ions borate.

En premier lieu, les résines échangeuses d'ions réagissent chimiquement avec les constituants du ciment et libèrent des ions borate qui inhibent la prise de ce dernier. En effet, lorsqu'on incorpore les résines à une pâte de ciment, l'eau de gâchage acquiert rapidement une force ionique très importante, en raison de la solubilisation des silicates calciques avec apparition de $Ca(OH)_2$, et suffisante pour déplacer une partie des ions $Li^+$ et $B(OH)_4^-$ portés respectivement par les résines cationiques et anioniques. Il s'ensuit la mise en solution d'ions borate et la précipitation d'un cortex minéral peu soluble à base de bore et de calcium autour des grains de ciment, stoppant ainsi l'évolution de leur hydratation. L'effet retardateur-colmateur classiquement observé avec l'acide borique et les borates a pour conséquence d'empêcher la prise de l'enrobé durant plusieurs jours, voire des semaines, limitant ainsi le flux de production de déchets conditionnés.

Par ailleurs, dès leur contact avec le ciment, les résines cationiques échangent leurs ions $Li^+$ contre des ions $Ca^{++}$ très nombreux dans le milieu et se rétractent légèrement ; il en est de même pour les résines anioniques où l'ion $B(OH)_4^-$ est partiellement échangé contre l'ion $OH^-$ (différence de taille des ions

hydratés).

En second lieu, les résines échangeuses d'ions ont une grande affinité pour l'eau et leurs grains peuvent avoir de ce fait des dimensions variables en fonction de leur teneur en eau.

Ainsi, le comportement du mélange ciment-résine pendant sa phase de malaxage varie en fonction de l'état d'humidité des grains de résine : lorsqu'on utilise une quantité élevée de résine, le mélange devient trop raide si les grains sont partiellement déshydratés car il y a compétition avec le ciment pour l'eau de gâchage. En revanche, le mélange devient trop liquide s'il existe un excès d'eau par rapport à la teneur minimale permettant aux grains de résine de ne pas se rétracter ; de plus, le contraste de densité entre grains de résine ( 1,2) et particules de ciment (2,9 à 3,2) produit alors des ségrégations.

Ces réactions chimiques et cette affinité pour l'eau des grains de résine conduisent aussi à certains effets néfastes lors du durcissement et du vieillissement du produit durci.

En effet, lorsque le produit parvient à durcir, les résistances mécaniques à 28 jours sont très faibles pour les taux d'incorporation de résines les plus intéressants, quelle que soit la qualité du ciment utilisé. Dans les cas les plus favorables, avec des compositions de matrice fournissant seules de très fortes résistances mécaniques, il n'est pas possible d'incorporer plus de 30% en volume de résines sans descendre en-dessous de 30 MPa ; ce taux médiocre correspond en masse à environ 20% de résines humides et à 15% de résines sèches.

L'immersion du produit durci dans de l'eau conduit à son gonflement et à sa fissuration puis à son délitage. Cette destruction est due aux tensions extrêmement fortes qui apparaissent localement sur chaque grain de résine (jusqu'à quelques dizaines de MPa) après réabsorption d'eau dans leur réseau poreux. Deux phénomènes distincts s'en trouvent à l'origine :

a) - pendant la prise, les résines ont en fait cédé de l'eau aux hydrates de ciment en cours de développement et se sont rétractées (la variation des conditions osmotiques entre également en ligne de compte),

b) - les résines ont échangé leurs ions avec les ions présents dans le ciment et se sont rétractées lors du durcissement.

Ainsi, la pâte de ciment encore molle maintenant son contact avec la paroi des grains de résine dans les premiers temps, le diamètre de ces derniers dans le matériau durci se trouve être inférieur au diamètre à saturation d'eau avant enrobage ; dans ces conditions, la réhumectation des résines dans l'enrobé provoque l'éclatement.

Par ailleurs, l'eau intersticielle présente dans les grains de résine est sujette à une radiolyse, ce qui augmente les tensions internes à l'intérieur du produit durci.

En dernier lieu, les résines échangeuses d'ions ont une mauvaise conductibilité thermique, ce qui ne facilite pas la dissipation de chaleur pendant la prise du ciment.

Pour surmonter ces inconvénients, on connaît un procédé qui consiste à soumettre les résines à un prétraitement par une solution aqueuse renfermant des ions de métaux alcalino-terreux et/ou des ions métalliques de valence au moins égale à 3, avant de les incorporer dans du ciment, comme il est décrit dans le brevet japonais KOKAI 48/28 899. Cependant, lorsque les déchets sont des résines échangeuses d'ions contenant des ions borate, ce procédé ne permet pas d'éliminer les inconvénients dus à la libération d'ions borate dans le milieu.

Par ailleurs, il a l'inconvénient de nécessiter une étape préliminaire de prétraitement avant l'incorporation des déchets dans le ciment.

Ainsi, aucun des procédés connus actuellement ne permet de surmonter simultanément les inconvénients dus à l'affinité des résines échangeuses d'ions pour l'eau et à la présence des ions borate dans les déchets.

Un autre problème qui se pose pour le traitement de déchets constitués par des résines échangeuses d'ions est la difficulté de savoir si ces résines contiennent ou non du bore, et dans le cas où elles en contiennent la quantité de bore présente.

Aussi, il serait souhaitable de mettre au point une matrice de conditionnement de déchets radioactifs qui soit utilisable dans le cas de déchets divers et puisse accueillir ainsi indifféremment des résines cationiques, anioniques, régénérées ou non régénérées, avec ou sans bore ou lithium.

La présente invention a précisément pour objet un procédé de conditionnement de déchets radioactifs ou toxiques comprenant éventuellement des ions borate, qui permet de surmonter les inconvénients décrits ci-dessus et de réaliser l'enrobage des déchets divers contenant ou non du bore.

Le procédé selon l'invention, de conditionnement de déchets radioactifs ou toxiques pouvant contenir des ions borate dans une matrice solide à base du ciment repose sur deux aspects :

a) - l'élaboration d'une matrice d'enrobage associée à la synthèse de minéraux particuliers (aspect chimique du procédé),

b) - la présence éventuelle d'un matériau de surenrobage lui-même à base de ciment, permettant l'amélioration du confinement pour le colis de déchets dans son ensemble (aspect géométrique du procédé).

Le procédé de fabrication de la matrice d'enrobage consiste :

a) - à mélanger les déchets en présence d'eau, avec du ciment alumineux, du ciment non alumineux et éventuellement un composé siliceux et/ou un composé contenant du bore en proportions telles que l'on forme un mélange donnant lieu à la cristallisation de phases minérales stables du type straetlingite, monoboroaluminate de calcium et/ou ettringite boratée, outre les hydrates classiques du ciment non alumineux, et

b) - à laisser durcir le mélange pour former la matrice solide comportant l'une au moins de ces phases.

Dans ce procédé, le fait de former autour des déchets une matrice solide comportant une phase stable du type straetlingite, monoboroaluminate et/ou ettringite boratée permet d'éviter les interactions chimiques néfastes entre le déchet éventuellement boraté et le ciment ou l'eau. Par ailleurs, on peut obtenir le durcissement du mélange en un seul jour, en évitant toute opération de prétraitement physique ou chimique du déchet.

Généralement, les quantités d'eau, de ciment non alumineux, de ciment alumineux et de composé siliceux utilisées sont telles que le rapport en poids eau/(ciment non alumineux + ciment alumineux + composé siliceux) soit inférieur à 0,5.

De préférence également, le rapport en poids ciment non alumineux/ciment alumineux se situe dans la gamme allant de 1 à 20.

Lorsque le rapport en poids eau/(ciment alumineux + ciment alumineux + composé siliceux) est faible, par exemple inférieur à 0,4, il est préférable d'ajouter au mélange un agent fluidifiant pour favoriser l'opération de mélange des constituants.

L'agent fluidifiant utilisé peut appartenir à la famille des mélamines, des naphtalènes sulfonates.

Selon un premier mode de mise en oeuvre du procédé de l'invention, on choisit les ciments alumineux et non alumineux utilisés dans l'étape a) et on ajoute un produit siliceux et éventuellement un composé contenant du bore en proportions telles que l'on forme entre autre une phase cristalline silico-alumineuse de type straetlingite.

En effet, cette phase est facile à produire à la température ambiante et elle permet d'obtenir les avantages suivants :

1) - formation d'un composé stable non sujet à un phénomène de conversion minéralogique comme dans le cas des hydrates de ciment alumineux et empêchant, par ailleurs, la cristallisation de ces derniers à terme,

2) - développement de résistances mécaniques élevées en raison d'un faciès cristallin favorable (système hexagonal),

3) - bonne résistance aux agressions chimiques et à l'action de la température, car la température de décomposition de la straetlingite est de 200 à 250 °C,

4) - faibles variations dimensionnelles à l'air ou sous eau,

5) - bonne affinité pour les radioéléments tels que le césium qui peuvent être incorporés dans le réseau cristallin de la straetlingite.

Dans ce cas, le ciment non alumineux est de préférence un ciment composé de clinker Portland convenant à la préparation de mélanges prompts.

A titre d'exemples de tels ciments, on peut citer le CPA, le CPJ, le CLC et le CLK.

Les autres phases minérales formées en proportions variables dans la matrice et accompagnant la straetlingite et les hydrates de ciment classiques contiennent du bore. Il s'agit des ettringites boratées et du monoboroaluminate de calcium dont la structure est calquée sur l'ettringite et le monosulfoaluminate connus dans les ciments.

$6CaO.Al_2O_3.B_2O_3.42H_2O$ : BOROETTRINGITE 1

$6CaO.Al_2O_3.2B_2O_3.39H_2O$ : BOROETTRINGITE 2

$8CaO.2Al_2O_3.B_2O_3.25H_2O$ : MONOBOROALUMINATE

Ces minéraux fortement hydratés font ainsi intervenir de l'aluminium et on peut les retrouver dans un diagramme ternaire $CaO-Al_2O_3-B_2O_3$ avec toutes les phases plus classiquement rencontrées.

Sur la figure 1, on a représenté un tel diagramme ternaire dans lequel les phases prises en considération sont les suivantes:

| | |
|---|---|
| $H_3BO_3$ | sassolite (=acide borique), |
| $Ca(OH)_2$ | portlandite, |
| $Ca[B(OH)_4]_2.2H_2O$ ou $CaO.B_2O_3.6H_2O$ | hexahydroborite, |
| $8CaO.2Al_2O_3.B_2O_3.25H_2O$ | "monoboroaluminate" (MBA) |
| $6CaO.Al_2O_3.2B_2O_3.39H_2O$ | "boroettringite 2" (BE2) |
| $6CaO.Al_2O_3.B_2O_3.42H_2O$ | "boroettringite 1" (BE1) |
| $6CaO.Al_2O_3.36H_2O$ | "calciettringite" |
| $3CaO.Al_2O_3$ | aluminate tricalcique |
| $CaO.Al_2O_3$ | aluminate monocalcique |
| $Al_2(OH)_6$ | gibbsite |

Sur ce diagramme, les compositions qui correspondront à la formation d'une phase du type boroettringite ou monoboroaluminate se situent dans l'aire du système délimité par les boroettringites 1 et 2 et le monoboroaluminate.

Ces minéraux fortement hydratés constituent des structures d'accueil très polymorphes pour l'ion borate $B(OH)_4^-$ . Leur faible solubilité n'empêche pas l'existence d'une certaine quantité de bore en solution dont le rôle est de réguler la prise du mélange ciments alumineux -non alumineux, y compris en présence d'ions accélérateurs provenant du déchet tel que le lithium.

Lorsque les déchets radioactifs à conditionner sont des concentrats liquides boratés, il n'est pas nécessaire d'ajouter un composé du bore et dans ce cas, on mélange dans l'étape a) les déchets radioactifs avec du ciment alumineux, du ciment non alumineux à base de clinker de Portland et un composé siliceux.

En revanche, pour les autres déchets radioactifs tels que les résines échangeuses d'ions boratées ou non, on mélange dans l'étape a) les déchets avec de l'eau, du ciment alumineux, du ciment non alumineux à base de clinker de Portland, un composé siliceux et un composé contenant du bore, ce dernier pour réguler la prise.

Selon l'invention, on peut encore améliorer le conditionnement du déchet radioactif en disposant autour du mélange durci une couche de mortier.

Dans ce cas, la disposition autour du produit durci d'une couche de mortier servant de surenrobage permet d'améliorer ses propriétés mécaniques et de confinement tout en incorporant une quantité plus importante de déchets.

Ainsi, le procédé de l'invention présente de nombreux avantages :

- l'absence de prétraitement simplifie beaucoup le procédé dans son ensemble,
- la réalisation de la matrice solide comportant les phases minérales de type stratlingite, monoboroaluminate et/ou ettringite est très simple et n'utilise que des ciments du commerce,
- le volume de déchets incorporé dans la matrice solide est important et peut représenter jusqu'à 6% en volume absolu du mélange,
- la résistance mécanique du produit durci obtenu dans l'étape a) est suffisante pour permettre sa manutention à partir de 15 jours, et il n'existe ni gonflement ni fissuration en présence d'eau, et
- le colis final comportant les déchets enrobés dans la matrice, et éventuellement la couche de mortier de surenrobage, satisfait aux conditions de stockage de l'ANDRA avec une résistance mécanique respectivement égale pour chaque matériau à 12 et 35 MPa après 28 jours.

L'invention sera mieux comprise à la lecture de la description qui suit, donnée bien entendu à titre illustratif et non limitatif, en référence au dessin annexé, sur lequel :

- la figure 1 déjà décrite représente le diagramme ternaire théorique du système $CaO-Al_2O_3-B_2O_3$, et
- la figure 2 représente en coupe verticale un produit obtenu par le procédé de l'invention.

Selon le premier mode de mise en oeuvre du procédé de l'invention, on choisit les constituants et les proportions des constituants à mélanger avec les déchets pour cristalliser préférentiellement une phase minérale de type straetlingite.

Il s'agit d'un silicoaluminate de calcium hydraté correspondant au produit d'hydratation de la géhlénite. Sa formule structurale s'écrit :

$$Ca_2^{2+}\left[SiO_4\right]^{4-}Al_2^{3+}\left[OH\right]_6^{-}\,.\,5H_2O$$

Ce minéral peut être obtenu de multiples façons, par exemple en faisant réagir de la chaux sur du métakaolin, ou plus simplement par réaction des hydrates de silicate de calcium (CSH) d'un ciment à base de clinker Portland et des hydrates d'aluminate de calcium ($CAH_{10}$) d'un ciment alumineux.

Ce dernier cas correspond aux "mélanges prompts" qui sont des compositions à base de ciment Portland comportant généralement entre 20 et 80% de ciment alumineux. Ces mélanges dont le temps de prise peut être fortement diminué, sont utilisés habituellement pour la confection de joints de scellements, pour le surfaçage et le colmatage car ils possèdent des résistances mécaniques assez faibles.

Dans ces mélanges, la prise rapide est due à une accélération de l'hydratation des aluminates par la chaux du ciment Portland et, la chaux étant consommée, à une activation de la dissolution des silicates. Aussi, lorsqu'on réalise le durcissement de ces mélanges en l'absence d'ions borate, la chaleur d'hydratation très importante est dissipée dans un court laps du temps et les températures atteintes pour des masses élevées de matériaux induisent des retraits, des fissurations et une hydratation incomplète des particules de ciment. Les faibles développement et enchevêtrement des cristallites d'hydrates alumineux ou silicatés expliquent l'origine des faibles résistances.

En revanche, lorsqu'on réalise le durcissement de ces mélanges en présence d'ions borate, la situation est profondément modifiée car cet élément joue le rôle d'un puissant régulateur.

En effet, l'hydratation du ciment Portland est ralentie, et il s'ensuit cette fois un retard de prise qui compense l'activation du ciment alumineux dont l'hydratation est elle-même inhibée par le bore. Les conséquences sont largement bénéfiques avec notamment :

- un temps de prise supérieur à 6 heures et inférieur à 24 heures,
- une évacuation progressive de la chaleur,
- une croissance et une mise en place lentes des cristaux d'hydrates favorables à l'acquisition de résistances convenables,
- un début de prise s'opérant avec un excès d'eau qui permet ainsi aux déchets boratés, par exemple aux grains de résines échangeuses d'ions, de conserver leur taille maximale avant le durcissement,
- un développement d'ettringite boratée primaire n'entraînant pas de gonflement car s'effectuant au sein d'une matrice encore plastique alors que ce minéral qui gonfle, provoque habituellement des fissurations lorsqu'il apparaît après le durcissement, et
- une rhéologie favorable du mélange qui évite l'emploi de fluidifiant (uniquement dans le cas de la cimentation des concentrats).

Par ailleurs, l'assemblage minéralogique obtenu après durcissement ne comporte pas d'hydrates alumineux pour lesquels se posent classiquement des problèmes de recristallisation dans le temps.

Selon l'environnement chimique des ions borates dans le déchet, on observe de plus la croissance primaire ou secondaire de monoboroaluminate de calcium dans l'enrobé durci sans conséquence particulière sur la qualité de ce dernier.

Lorsqu'on part d'un mélange prompt comportant 50% de ciment Portland et 50% de ciment alumineux, les conditions d'apparition de la straetlingite sont les suivantes :

1) mise en solution d'ions $Ca^{2+}$ et $AlO_2^-$ conduisant à l'hydratation prioritaire du ciment alumineux, soit à la production des hydrates $CAH_{10}$ et $C_2AH_8$,

2) - l'hydratation du ciment Portland commence lorsque la majeure partie du ciment alumineux est transformée en hydrates, la straetlingite apparaît consécutivement et peut être décelée à l'échéance d'un jour.

La teneur en eau du mélange conditionne l'évolution des associations minéralogiques.

Ainsi, avec un faible rapport eau/ciment, l'hydrate cubique stable $C_3AH_6$, le moins riche en eau, est formé avec la straetlingite dont la cristallisation est limitée par la déficience en eau. Par ailleurs, le manque de réactivité de l'hydrate $C_3AH_6$ vis-à-vis des produits silicatés du mélange empêche également la formation de straetlingite.

Avec un rapport eau/ciment élevé, les hydrates d'aluminate de calcium $CAH_{10}$ puis $C_2AH_8$ précèdent l'apparition de la straetlingite ($C_2ASH_8$) qui se forme normalement par réaction avec les silicates hydratés (CSH) selon les schémas réactionnels suivants :

$$2CAH_{10} + C_3S_2H_3 \dashrightarrow 2C_2ASH_8 + CH + 6H \quad (1)$$

$$2C_2AH_8 + C_3S_2H_3 \dashrightarrow 2C_2ASH_8 + 3CH \quad (2)$$

La réaction (1) est plus rapide que la réaction (2) mais dans les deux cas la cinétique est contrôlée par l'hydratation des silicates de calcium :

$$2C_3S + 6H \rightarrow C_3S_2H_3 + 3CH \quad (3)$$

$$2C_2S + 4H \rightarrow C_3S_2H_3 + CH \quad (4)$$

Ainsi, on forme dans chaque cas de la chaux. Or, la présence de cette dernière du fait d'un excès initial ou momentané a pour effet d'inhiber la formation de straetlingite et de favoriser celle de l'hydrate d'aluminate inerte $C_3AH_6$.

Aussi, pour cristalliser essentiellement de la straetlingite, il est important de n'associer au liant alumineux ni un ciment comportant de la chaux libre, ni a fortiori de la chaux pure. On préfère en conséquence utiliser comme ciment non alumineux un ciment à base de clinker Portland tel que CLC, CLK, CPJ ou CPA.

Pour favoriser l'apparition de straetlingite, il est nécessaire aussi d'ajouter au mélange des déchets du ciment alumineux et du ciment non alumineux avec l'eau, un composé siliceux.

De nombreux composés siliceux peuvent convenir du moment qu'ils sont aptes à fournir de la silice. A titre d'exemple de tels composés siliceux, on peut citer les pouzzolanes, les argiles, le métakaolin, le kieselgur, les fumées de silice, le quartz broyé, les gels de silice, les poudres de verre ou le silicate de sodium.

Dans le cas où les déchets à conditionner sont des liquides constitués par des concentrats boratés, il n'est pas nécessaire d'ajouter au mélange un composé contenant du bore.

En revanche, lorsqu'il s'agit de déchets ne contenant pas de bore, ou en contenant à une teneur difficile à estimer, on ajoute au mélange un composé de bore soluble dans l'eau.

En effet, dans les mélanges de ciment alumineux, de ciment à base de clinker Portland et d'un composé siliceux choisi pour obtenir la composition stoechiométrique de la straetlingite, on peut réguler cette formation par la présence de bore dans le liquide d'hydratation.

Le mécanisme d'action peut être résumé de la façon suivante :

- interaction des ions $[B(OH)_4]^-$ avec les ions $Ca^{2+}$ en solution dès le début du gâchage,
- appauvrissement en ions $Ca^{2+}$ en solution et action colmatante des produits d'interaction inhibant fortement l'hydratation du ciment alumineux composé essentiellement d'aluminate monocalcique CA, l'hydratation des silicates calciques étant totalement bloquée,
- les hydrates des aluminates calciques $CaH_{10}$ et $C_2AH_8$ sont formés et ne peuvent être convertis en $C_3AH_6$ inerte ; des boroaluminates de calcium (boroettringite ou monoboroaluminate) apparaissent alors à sa place,
- l'hydratation du ciment alumineux étant achevée, les silicates de calcium commencent à réagir pour former de la straetlingite $C_2ASH_8$,
- la boroettringite est généralement déstabilisée au profit de la straetlingite et du monoboroaluminate.

Dans ce cas, la matrice complètement hydratée et solidifiée comprend donc essentiellement de la straetlingite et du monoboroaluminate de calcium stables.

Comme précédemment, l'apport massif de chaux doit être évité en présence de bore, car outre le risque de fausse prise par cristallisation d'hexahydroborite, il y a consécutivement activation du liant alumineux et dérégulation complète du système avec prise trop rapide. Par contre, l'eau de gâchage peut contenir de la chaux jusqu'à saturation.

Dans l'invention, on utilise de préférence des composés de bore solubles dans l'eau, par exemple l'acide orthoborique, le boraxe et les borates en général.

Dans l'invention, on peut également utiliser des ciments alumineux de différents types. Toutefois, on préfère utiliser des ciments à forte teneur en alumine, par exemple des ciments du genre Secar plutôt que des ciments du genre Fondu qui contiennent trop d'impuretés. Par ailleurs, les ciments Secar sont de couleur blanche et ne peuvent être confondus avec les ciments à base de Portland.

Pour ces derniers, il convient de rechercher des qualités telle que la teneur en sulfate ne soit pas supérieure à 2,5% en poids sous peine d'observer une interférence avec le système Ca-Al-B se manifestant par un défaut de prise.

Ce premier mode de mise en oeuvre du procédé de l'invention peut être utilisé pour le traitement de déchets variés en particulier de résines échangeuses d'ions ou de concentrats liquides boratés.

Dans le cas des résines échangeuses d'ions, celles-ci peuvent être des résines cationiques sous forme $H^+$ ou sous forme $Li^+$, des résines anioniques sous forme $OH^-$ ou $[B(OH)_4]^-$ ou des lits mélangés de résines échangeuses cationiques at anioniques.

Dans le cas de résines échangeuses cationiques sous forme $H^+$, l'affinité de la résine pour les ions $Ca^{2+}$ du ciment est grande at aboutit à la libération de $H^+$, ce qui relargue de l'acidité. Le calcium prélevé aux dépens des ciments alumineux et non alumineux est en faible concentration en solution et le mélange

est fortement régulé.

Dans le cas de résines échangeuses de cations sous forme $Li^+$, l'affinité de la résine pour les ions calcium aboutit à la libération de lithium. Cependant, comme le lithium est un élément activateur, on peut obtenir une prise normale du ciment.

Dans le cas de résines échangeuses d'anions sous forme $OH^-$, l'affinité de la résine pour les ions $[B(OH)_4]^-$ présents dans le mélange et provenant du composé de bore, aboutit à la libération des ions $OH^-$ dans le mélange. Ainsi, le bore qui constitue un élément régulateur de la prise est partiellement consommé par la résine et la prise est normale.

Dans le cas de résines échangeuses d'anions sous forme $[B(OH)_4]^-$, on obtient une forte régulation du mélange par l'addition du composé du bore.

Dans le cas de mélanges de résines, sous forme $H^+$ et sous forme $OH^-$, la prise est assez fortement régulée avec la fixation des ions $Ca^{++}$ et la création d'eau.

Dans le cas de mélanges de résines échangeuses d'ions sous forme $Li^+$ et $(B(OH_4)^-$, la prise est normale car il y a libération de lithium et donc d'un élément activateur qui compense la présence de l'élément inhibiteur.

Ce mode de mise en oeuvre du procédé de l'invention peut aussi être utilisé pour le traitement de concentrats liquides boratés. Dans ce cas, il s'agit de solutions aqueuses contenant du bore, généralement sous forme de borate de sodium, et il n'est pas nécessaire d'ajouter de l'eau, ni un composé de bore.

En effet, le bore dissous dans le concentrat suffit à réguler fortement le mélange prompt. L'action accélératrice de l'ion sodium ne compensant pas totalement l'action inhibitrice du bore, les borates de calcium qui peuvent apparaître dans les premiers moments sont progressivement détruits en présence des ions aluminium du ciment alumineux au profit du monoboroaluminate de calcium qui est abondamment représenté aux côtés de la straetlingite. Cette dernière cristallise progressivement à partir du liant non alumineux et de l'apport siliceux, la conversion en $C_3AH_6$ étant par ailleurs bloquée par le bore.

Les exemples 1 et 2 qui suivent illustrent ce premier mode de mise en oeuvre du procédé de l'invention.

EXEMPLE 1 : Conditionnement de résines échangeuses d'ions.

Dans cet exemple, on traite des résines échangeuses d'ions qui ont été tassées-décantées sous eau, ce qui correspond au stockage de résines échangeuses d'ions dans un pot doseur à partir duquel on expulse la quantité à traiter par une chasse hydraulique.

L'état standard de porosité associé au volume apparent occupé par les résines tassées-décantées peut être défini par un indice des vides virtuel "u" correspondant à une porosité "n" de 25%:

$$n_{REI} = \frac{u}{1 + u} = 0{,}25 \text{ soit } U_{REI} = \frac{1}{3} = 0{,}333$$

Ceci implique un volume apparent égal à :

$V_{APP} = (1 + u)V_{REI} = 1{,}333\ V_{REI}$

On choisit de conditionner les résines dans du ciment de façon à obtenir un taux d'enrobage volumique $k_v$ égal à 2/3, défini par le rapport $V_{APP}/V_T$ avec $V_T$ représentant le volume total de l'enrobé, soit $V_T = V_{REI} + V_E + V_C$ avec $V_E$ représentant le volume d'eau et $V_C$ le volume de ciment.

Si l'on note que le volume apparent des résines échangeuses d'ions comprend le volume réel $V_{REI}$ et le volume d'eau saturant $V_{ESAT}$, le volume d'eau de gâchage $V_{EGA}$ est tel que $V_E = V_{ESAT} + V_{EGA}$. En choisissant un taux d'enrobage $k_v = 2/3$, il s'ensuit que comme $V_{APP} = 4/3V_{REI}$, le volume réel $V_{REI} = V_T/2$, c'est-à-dire que le volume réel des résines échangeuses d'ions occupe la moitié du volume total de l'enrobé.

Par ailleurs, le volume d'eau saturant est égal à $V_{APP}$-$V_{REI} = V_T/6$.

Si l'on choisit un indice des vides de la pâte assez faible de façon à compenser l'excès d'eau éventuel apporté par les résines, par exemple un indice $u_P = V_E/V_C = 0{,}875$, avec $V_C$ représentant le volume total des ciments alumineux, non alumineux et du composé siliceux, on obtient $V_C(1 + u_P) = V_P$, avec $V_P$ représentant le volume de la pâte qui est égal à $V_T/2$ et à $V_C + V_E$.

On obtient donc :
$V_C = 4V_T/15$, $V_E = 7V_T/30$, et $V_{EGA} = V_T/15$.

Dans le cas d'un volume apparent de 1l de résines échangeuses d'ions tassées-décantées à traiter, les volumes à mettre en jeu sont donc les suivants :
$V_{REI} = 750ml$, $V_{ESAT} = 250ml$, $V_{EGA} = 100ml$, $V_C = 400ml$, soit $V_T = 1500ml$ et $V_P = 750ml$.

Pour estimer maintenant les quantités respectives de ciment alumineux, de ciment non alumineux et de composé siliceux à utiliser, afin d'obtenir la composition virtuelle de la straetlingite soit $Ca_2Al_2SiO_7$, $nH_2O$, on peut opérer de la façon suivante.

Si l'on désigne par :

Ca, Al, Si } le nombre d'atomes de calcium d'aluminium et de silicium respectivement nécessaires à la synthèse d'une mole de straetlingite,

X la masse de ciment non alumineux à introduire pour 1 mole de straetlingite (masse exprimées en g),
Y la masse de ciment alumineux pour 1 mole de straetlingite,
Z la masse d'additif siliceux pour 1 mole de straetlingite,

$Ca_x$, $Ca_y$, $Ca_z$, $Al_x$, $Al_y$, $Al_z$, $Si_x$, $Si_y$, $Si_z$ } le nombre d'atomes effectivement libérables par 1g de chaque constituant X, Y ou Z,

la masse des divers ingrédients aboutissant à la composition straetlingitique est donnée par la résolution du système :

$$\begin{bmatrix} Ca \\ Al \\ Si \end{bmatrix} = \begin{bmatrix} Ca_x & Ca_y & Ca_z \\ Al_x & Al_y & Al_z \\ Si_x & Si_y & Si_z \end{bmatrix} \cdot \begin{bmatrix} X \\ Y \\ Z \end{bmatrix} = \begin{bmatrix} 2 \\ 2 \\ 1 \end{bmatrix}$$

En choisissant par exemple :

- pour liant non alumineux : un CLC 45 avec : $Ca_x = 8,114.10^{-3}$ ; $Al_x = 2,118.10^{-3}$ ; $Si_x = 4,827.10^{-3}$,la valeur de $Ca_x$ tient compte de la totalité du calcium du ciment.
- pour liant alumineux : SECAR 71 avec : $Ca_y = 4,457.10^{-3}$ ; $Al_y = 10,789.10^{-3}$ ; $Si_y = 0$, la valeur $Al_y$ ne prend pas en compte la fraction de -$Al_2O_3$ inerte,
- pour additif siliceux : une fumée de silice avec : $Ca_z = 0$ ; $Al_z = 0$ ; $Si_z = 15,595.10^{-3}$.

Les solutions sont les suivantes :

$$X = \frac{2(Ca_y - Al_y)}{Ca_y Al_x - Ca_x Al_y} = 162,155 \text{ g},$$

$$Y = \frac{2(Al_x - Ca_x)}{Ca_y Al_x - Ca_x Al_y} = \frac{2 - XAl_x}{Al_y} = 153,528 \text{ g},$$

$$Z = \frac{1 - XSi_x}{Si_z} = 13,937 \text{ g}.$$

Ce calcul montre que les proportions de ciments alumineux et non alumineux sont sensiblement équivalentes, ce qui correspond à un mélange prompt typique. Par ailleurs, la proportion de composé siliceux, c'est-à-dire de fumées de silice, à utiliser représente moins de 10% du ciment et correspond ainsi au dosage conseillé pour ce constituant dans les ciments.

En ce qui concerne l'ajout de bore, celui-ci doit être compatible avec une solubilisation complète dans l'eau du mélange afin d'éviter la présence de source de bore résiduel dans la matrice.

Dans le cas de l'acide orthoborique $H_3BO_3$, la faible solubilité de cet acide (environ 50g/l à 20 ° C) conduit à utiliser une quantité de 15g environ pour le volume liquide associé au conditionnement de 1l apparent de résines échangeuses d'ions tassées-décantées, soit 350ml au total.

En conséquence, afin de respecter le volume liquide déterminé pour le gâchage, le volume d'eau $V_{EGA}$ doit être corrigé de la façon suivante :

$$V_{EGA} = 100 - M_{H_3BO_3} / m_{H_3BO_3} = 100 - \frac{15}{1,5} = 90 \text{ ml},$$

$$m_{H_3BO_3}$$

represénte la masse d'acide orthoborique utilisée, soit 15g, et

$$M_{H_3BO_3}$$

représente la masse volumique de l'acide $H_3BO_3$, soit 1,5.

Aussi, le volume d'eau de gâchage doit être seulement de 90 ml.

En retenant pour les divers ingrédients les masses volumiques suivantes :

CLC 45 : $m_x$ = 2,90,

SECAR 71 : $m_y$ = 3,00,

FUMEES $SiO_2$ : $m_z$ = 2,00.

Les masses mises en jeu pour un volume total de "liants" $V_c$ = 400 ml sont respectivement égales à :

$$M_x = \frac{X \cdot V_c}{\frac{X}{m_x} + \frac{Y}{m_y} + \frac{Z}{m_z}} = \frac{162,155 \times 400}{114,060} = 568,7 \text{ g},$$

$$M_y = \frac{Y \cdot V_c}{\frac{X}{m_x} + \frac{Y}{m_y} + \frac{Z}{m_z}} = \frac{153,528 \times 400}{114,060} = 538,4 \text{ g},$$

$$M_z = \frac{Z \cdot V_c}{\frac{X}{m_x} + \frac{Y}{m_y} + \frac{Z}{m_z}} = \frac{13,937 \times 400}{114,060} = 48,9 \text{ g}.$$

Dans cet exemple, le rapport eau/ciments du mélange est faible, il est donc indispensable d'ajouter un fluidifiant pour obtenir une consistance favorable au malaxage directement à l'intérieur du fût. Ce fluidifiant peut être incorporé sous forme solide, par exemple en poudre, au ciment et à l'additif siliceux de façon à défloculer dès les premiers moments de l'hydratation les particules de fines, en particulier celles du composé siliceux.

La dose d'agent fluidifiant utilisée dépend de la masse de ciment non alumineux et de composé siliceux car le ciment alumineux est peu sensible à son action.

Lorsqu'on utilise comme fluidifiant un produit de la famille des mélamines du type Melment, la dose préconisée est de 1kg pour 100kg de ciment, ce qui conduit à utiliser dans cet exemple 6,2 g de fluidifiant.

L'incorporation de cet agent fluidifiant contribue par ailleurs à isoler momentanément les grains de résine échangeuse d'ions de leur nouvel environnement chimique par un film tensio-actif. Ce dernier limite ainsi les échanges ioniques brutaux et les risques de prise trop rapide du ciment.

La formulation complète utilisée pour le conditionnement de 1l de résines échangeuses d'ions tassées-décantées est en définitive la suivante :

| | |
|---|---|
| - DECHET REI | 1 l, |
| - EAU | 90 g, |
| - FUMEES DE SILICE | 49 g, |
| - CLC 45 | 569 g, |
| - SECAR 71 | 538 g, |
| - $H_3BO_3$ | 15 g, |
| - MELMENT | 6,2 g |

Le volume total est de 1,5l environ avec un rapport équivalent eau/ciment de 0,3.

Pour réaliser le conditionnement, on procède de la façon suivante.

On introduit tout d'abord dans le fût, les résines échangeuses d'ions tassées-décantées, puis l'eau de gâchage, le fluidifiant, les fumées de silice, l'acide borique, le ciment alumineux et le ciment non alumineux.

En effet, il est préférable d'incorporer l'additif siliceux avant les deux ciments pour permettre une défloculation efficace en l'absence de pH alcalin, les grains de résines favorisant la dispersion par attrition. Toutefois, on peut incorporer les deux liants hydrauliques, c'est-à-dire le ciment alumineux et le ciment non alumineux, simultanément sous la forme d'un liant composé préformulé. On peut aussi introduire ensemble les déchets, l'eau de gâchage, le fluidifiant, les fumées de silice et l'acide borique, puis les deux ciments.

Avant d'introduire les ciments, on soumet l'ensemble à un malaxage pendant au moins trois minutes. On introduit ensuite le ciment alumineux et le ciment non alumineux et on poursuit le malaxage pendant au

moins 3 minutes, mais pas plus de 10 minutes. L'introduction des ciments des effectuée dans la phase liquide en contrôlant le débit afin de ne pas bloquer le système de malaxage par un déversement massif.

A la fin du malaxage, le mélange qui n'est pas encore durci, présente :

- une consistance liquide pendant une demi-heure,
- un caractère thixotropique, ce qui impose de ne pas soumettre le mélange à une vibration sous peine d'entraîner une ségrégation des constituants,
- une prise plus ou moins lente intervenant entre 1 et 24 heures,
- une absence de ressuage à 24 heures.

Une fois durci, l'enrobé présente les caractéristiques suivantes :

- une absence de fissuration sous eau,
- des résistances mécaniques supérieures à 12 MPA à 28 jours permettant la manutention,
- une composition minéralogique évoluant très largement au-delà de 28 jours en relation avec les résistances mécaniques : straetlingite principalement, monoboroaluminate de calcium et accessoirement de l'ettringite boratée.

L'évolution du matériau à l'état confiné, en enceinte étanche, ou mieux sous eau, laisse apparaître une amélioration des résistances mécaniques à l'échéance de 90 jours, la cristallisation de straetlingite étant complétée plus facilement en l'absence de dessication.

EXEMPLE 2 : Conditionnement de concentrats boratés.

Dans ce cas, la présence de bore est parfaitement identifiée et comme le déchet à traiter est une solution aqueuse, on peut supprimer l'adjonction d'acide orthoborique, d'eau ainsi que de l'adjuvant fluidifiant.

Dans ce cas, on peut choisir un taux d'incorporation égal à 4/7, c'est-à-dire un rapport $V_L/V_T$ de 4/7 avec $V_L$ représentant le volume réel des déchets liquides. Comme $V_T = V_L + V_C$ avec $V_C$ représentant le volume des ciments et de l'additif siliceux, on obtient :

$$V_L/V_C = 4/3 = u_P.$$

Ainsi, les volumes mis en jeu pour conditionner 1l de concentrat sont les suivants : $V_L$ = 1000 ml, $V_C$ = 750 ml, soit un volume total $V_T$ de 1750 ml.

Dans le cas, le taux d'incorporation voisin de 57% détermine un rapport équivalent eau/ciment de 0,45 environ.

Si l'on utilise les mêmes ciments et le même composé siliceux que dans l'exemple 1, les masses mises en jeu pour un volume total de liant de 750 ml sont respectivement égales à :

Ciment non alumineux : (CLC 45)
$$M'_x = \frac{X \cdot V_C}{\sum V_C} = \frac{162,155 \times 750}{114,060} = 1066,2 \text{ g},$$

Ciment alumineux : (SECAR 71)
$$M'_y = \frac{Y \cdot V_C}{\sum V_C} = \frac{153,528 \times 750}{114,060} = 1009,5 \text{ g},$$

$$\text{Additif siliceux : (FUMEES DE SILICE)} \quad M'_z = \frac{Z \cdot V_C}{\sum V_C} = \frac{13,937 \times 750}{114,060} = 91,6 \text{ g},$$

$$\text{où} \quad V_C = \frac{X}{m_x} + \frac{Y}{m_y} + \frac{Z}{m_z}$$

La formulation pour l'enrobage de 1l de concentrat est en définitive la suivante :

| | |
|---|---|
| - DECHET CONCENTRAT BORATE | 1 l, |
| - FUMEES DE SILICE | 92 g, |
| - CLC 45 | 1066 g, |
| - SECAR 71 | 1010 g. |

Pour réaliser le conditionnement, on peut opérer comme dans l'exemple 1 en introduisant les constituants dans l'ordre suivant :

1) - concentrat liquide,
2) - additif siliceux,
3) - ciment alumineux,
4) - ciment non alumineux.

On peut malaxer ensemble le concentrat et les fumées de silice pendant au moins 3 minutes avant d'introduire les ciments successivement ou simultanément.

Après introduction des ciments, on poursuit le malaxage pendant 3 à 10 minutes.

Après ce malaxage, le mélange frais présente :

- une consistance liquide durant la demi-heure suivant le début du malaxage,
- une prise lente intervenant dans le délai de 24 heures,
- une absence de ressuage à 24 heures.

Après durcissement, le mélange présente :

- une absence de fissuration sous eau,
- une résistance mécanique en compression supérieure à 20 MPa à 28 jours et augmentant significativement à plus longue échéance,
- une composition minéralogique évoluant largement au-delà de 28 jours et comprenant :
  straetlingite principalement,
  monoboroaluminate de calcium,
  ettringite boratée.

Selon un second mode de réalisation, le procédé de l'invention est mis en oeuvre pour former en proportion minoritaire des phases minérales du type straetlingite, ettringite boratée et/ou monoboroaluminate de calcium en partant de déchets contenant du bore.

On utilise pour celà des mélanges ciment alumineux - ciment Portland très enrichis en ce dernier et comportant facultativement un composé siliceux. Avec un rapport ciment Portland/ciment alumineux supérieur à 4, par exemple 10 ou 20, l'hydratation du ciment Portland est encore activée par le ciment alumineux mais dans des conditions s'éloignant de celles des mélanges prompts typiques. De ce fait, la régulation du mélange nécessite moins de bore. Dans ce cas la matrice durcie contient essentiellement les silicates de calcium hydratés habituels du ciment Portland et en faible proportion la straetlingite, les ettringites boratées et/ou le monoboroaluminate.

Comme dans le premier mode de réalisation, la régulation de la prise par les ions borates du déchet ainsi que de l'ajout détermine un développement lent de l'hydratation permettant une évacuation progressive de la chaleur.

La présence d'une faible quantité d'eau nécessaire à l'acquisition de résistance mécaniques élevées implique également l'utilisation d'un agent fluidifiant.

Pour réaliser le conditionnement selon ce second mode de réalisation de l'invention, un mode opératoire rigoureux doit être respecté en particulier dans l'ordre d'introduction des différents constituants.

Il importe ainsi que le déchet boraté ou non accompagné de l'ajout systématique en bore soit introduit dans un milieu aqueux contenant déjà des ions $Ca^{++}$ en solution.

En effet, la plus grande partie du bore réagit directement dans de cas avec le calcium permettant par la suite, après introduction du ciment, une hydradation normale de ce dernier. Compte tenu de la faible quantité de ciment alumineux dans ce second mode de réalisation, l'activation du ciment à base de Portland ne pourrait être obtenue si au contraire le ciment était introduit après le déchet boraté, conduisant ainsi à la formation immédiate d'un cortex boraté autour des grains de ciment avec blocage de la réaction d'hydratation.

Afin que le bore puisse réagir avec une solution déjà chargée en calcium, il suffit pour cela d'introduire le ciment en deux temps selon le mode opératoire suivant qui se déroule intégralement dans le fût de malaxage.

a) introduction de l'eau de gâchage, de la moitié du fluidifiant, et de l'éventuel ajout siliceux,

b) introduction de 1/5ème du ciment non alumineux et malaxage de 3 minutes minimum,

c) introduction du déchet et de l'ajout en bore (cas des REI) avec malaxage de 3 minutes minimum,

d) introduction des 4/5 restants du ciment non alumineux, puis du ciment alumineux et de la dernière moitié du fluidifiant.

Au cours de ces différentes opérations le malaxage ne doit jamais être interrompu afin d'éviter toute ségrégation avant le mélange complet.

EXEMPLE 3 :

On décrit, ci-après, l'utilisation du second mode de réalisation de l'invention pour traiter une résine Amberlite du type IRN-150L en lits mélangés, chargée en bore et en lithium qui présence les caractéristiques suivantes :

- teneur en eau : W = 52,5%
- densité apparente : $d_a$ = 1042 g/l apparent.

En retenant un indice des vides de la résine égal à $u_{REI} = 1/3$ et un taux d'incorporation en volume apparent t des REI tassées-décantées avec leur eau d'immersion et $V_T$ le volume total de l'enrobé (REI + matrice) il s'ensuit que $V_{REI} = 3/8V_T$, c'est-à-dire que le volume réel des résines échangeuses d'ions occupe 37,5% du volume total de l'enrobé.

Il vient ensuite :

- le volume de pâte : $V_p = V_T - V_{REI} = 5/8V_T$
- le volume des ciments (et ajout siliceux) $V_C = V_P/1 + u_P = V_T/3$ en prenant $u_P = V_E/V_C = 0{,}875$
- le volume d'eau total : $V_E = V_P - V_C = 7/24V_T$
- le volume d'eau de saturation : $V_{ESAT} = V_{APP} - V_{REI} = V_T/8$
- le volume d'eau de gâchage : $V_{EGA} = V_E - V_{ESAT} = V_T/6$

Les volumes mis en jeu pour cimenter 1l apparent de REI tassées-décantées sont donc les suivants :

$V_{REI} = 750$ ml, $V_{ESAT} = 250$ ml, $V_{EGA} = 333{,}33$ ml,
$V_C = 666{,}66$ ml, soit $V_T = 2000$ ml et $V_P = 1250$ ml.

La composition de la matrice, c'est-à-dire le détail de $V_C$, est cette fois donnée en fonction de pourcentages optimaux observés pour le ciment alumineux Y et les fumés de silice Z au sein d'un mélange comportant essentiellement un ciment Portland X soit :

$V_X = 80\%V_C$ ; $V_Y = 10\%V_C$ ; $V_Z = 10\%V_C$.

En utilisant un CPA55, un SECAR 71 et des fumées de silice dont les masses volumiques respectives sont $m_x = 3{,}2$ ; $m_y = 3{,}0$ et $m_z = 2{,}0$, les masses mises en jeu pour un volume de "liants" de 666,66 ml sont les suivantes :

$M_X = 1706{,}7$ g, $M_Y = 200{,}0$ g, $M_Z = 133{,}3$ g

Par ailleurs l'ajout de bore soluble sous forme d'acide orthoborique $H_3BO_3$ étant ramené à 5 g seulement, compte tenu de la faible proportion de ciment alumineux, le volume d'eau pour le gâchage doit être corrigé de la façon suivante :

$$V_{EGA} = 333{,}33 - \frac{5}{1{,}5} = 330 \text{ ml} \quad (m_{H_3BO_3} = 1{,}5 \text{ g/cm}^3)$$

Le faible rapport eau/ciments du mélange nécessite un dosage en fluidifiant important car basé sur la porportion de CPA et de fumées de silice.

A raison de 1 kg pour 100 kg de ciment, la masse du fluidifiant employé, du type Melment en poudre, est de 18,4 g.

La formulation complète utilisée pour le conditionnement de 1l de résines échangeuses d'ions tassées-décantées est en définitive la suivante :

| | |
|---|---|
| - DECHET REI | 1 l, |
| - EAU | 330 g, |
| - FUMEES DE SILICE | 135 g, |
| - CPA 55 | 1700 g, |
| - SECAR 71 | 200 g, |
| - $H_3BO_3$ | 5 g, |
| - MELMENT | 18,4 g. |

Le volume total est d'environ 2l avec un rapport équivalent eau/ciment de 0,286.

Pour réaliser le conditionnement, le mélange des constituants est effectué dans le fût d'accueil définitif à l'aide d'une pale dont le mouvement n'est jamais interrompu de l'introduction du premier constituant jusqu'au dernier compris.

L'eau de gâchage, les fumées de silice dont d'abord introduites dans leur totalité avec la moitié de la dose du fluidifiant. Après un malaxage de 3 min., un cinquième du ciment Portland est introduit, suivi 3 min plus tard par la totalité du déchet et de l'acide borique. Le malaxage se poursuit encore 3 min, avant l'introduction des quatre cinquièmes restants du ciment Portland et de la dernière moitié du fluidifiant eux-mêmes malaxés pendant 3min. Le ciment alumineux est introduit en dernier avec un malaxage consécutif de 3 min.

A la fin du malaxage d'une durée totale minimum de 15 min, le mélange non encore durci présente :

- une consistance fluide pendant une demi-heure avec un caractère thixotrope,
- une prise plus ou moins lente intervenant entre 1 et 24 heures avec une absence de ressuage.

Une fois durci, l'enrobé présente les caractéristiques suivantes :

- résistances mécaniques supérieures à 20 MPa à 28 jours permettant la manutention,
- absence de fissuration sous eau,
- composition minéralogique révélant une faible proportion de straetlingite et/ou de minéraux boratés tels que le monoboroaluminate et la boroettringite.

Dans ce second mode de réalisation de l'invention tout comme dans le premier, l'amélioration du confinement peut être obtenue grâce à la présente d'un surenrobage dont la mise en place implique le moyen de malaxage utilisé.

Généralement, on réalise le malaxage avec un malaxeur comportant une pale perdue qui est enfoncée dans l'enrobé après usage jusqu'à toucher le fond du fût, puis déconnectée du bloc moteur. La longueur de la pale est telle que son extrémité dépasse d'au moins 5 cm du sommet du fût, et elle servira ultérieurement comme organe de préhension du fût. Aussi, pour que cette manutention puisse être effectuée dans de bonnes conditions, il est nécessaire que le contenu du fût soit suffisamment durci, et on préfère généralement attendre 15 jours pour obtenir la résistance mécanique requise.

Ainsi, le fût quittant le poste de malaxage, est acheminé sur une aire de stockage provisoire constituée par exemple par un tunnel en béton baryté assurant une protection biologique suffisante pour permettre toute intervention dans le restant du local.

Après ce stockage, on peut procéder à un surenrobage en disposant autour du fût une couche de mortier qui confère à l'ensemble la résistance mécanique et les propriétés de confinement requises.

Cette couche de mortier peut être formée à partir d'un mélange comprenant du ciment, du sable siliceux, des fumées de silice, une argile smectique telle que la bentonite, et de l'eau. La composition de ce mélange est de préférence celle d'un mortier compact comportant très peu d'eau, généralement moins de 30% en poids d'eau.

Généralement, on ajoute à cette composition un fluidifiant pour faciliter sa mise en place autour du fût par coulée ou par injection. Ce fluidifiant ne doit pas être entraîneur d'air pour ne pas diminuer les performances mécaniques du colis et doit être d'autant plus efficace que le mortier contient, outre un fort dosage en ciment, des fumées de silice et une argile telle que la bentonite.

Le ciment utilisé est un liant à base de laitier, par exemple un ciment de type CLC ou CLK. Toutefois, on peut utiliser d'autres ciments dont le CPA.

L'action conjuguée des particules très réactives de silice amorphe et de l'argile confère au matériau une très faible perméabilité et un haut pouvoir de confinement.

Afin de conserver des résistances mécaniques élevées, supérieures à 60 MPa à 28 jours, et d'éviter des retraits trop importants, il convient de limiter la quantité d'argile à moins de 5% du volume des fines (ciments, sables, fumées de silice et argile).

A titre d'exemple, on peut utiliser la composition suivante de mortier :

| | |
|---|---|
| - sable siliceux 0-4 mm | 1170 kg/m$^3$, |
| - ciment CLC 45 | 650 kg/m$^3$, |
| - fumées de silice | 130 kg/m$^3$, |
| - argile smectique | 30 kg/m$^3$, |
| - eau + fluidifiant | 260 l/m$^3$. |

Pour mettre en place cette composition autour du fût contenant les déchets incorporés dans le ciment, on peut opérer de la façon suivante.

On peut disposer le fût à l'intérieur d'un conteneur qui peut être par exemple en béton, en le maintenant à la distance voulue des parois du conteneur par un système de levage relié à la pale et par des bras télémanipulateurs. On coule alors, dans le conteneur et autour du fût, le mortier, c'est-à-dire le mélange de ciment, de sable siliceux, de fumées de silice, d'argile smectique et d'eau qui a été préparé dans un malaxeur.

A titre d'exemple, on peut utiliser un malaxeur d'une capacité de 500 l qui est un appareil du commerce disposant de pales multiples à mouvements respectivement circulaire et épicycloïdal assurant une parfaite homogénéisation du mélange. Après malaxage, le mélange est pompé à partir d'une bâche de reprise et acheminé dans le conteneur au moyen d'une conduite d'injection flexible de courte longueur. La pompe peut être de type volumétrique ou mécanique, capable d'exercer une pression d'injection d'au moins 1 MPa. Généralement, on réalise la coulée en deux étapes pour laisser le temps au mortier d'abord thixotrope d'acquérir une résistance au cisaillement plus importante. Dans un premier temps, on coule le mortier par gravité très progressivement afin de ne pas emprisonner d'air ou d'excentrer le fût par rapport au conteneur jusqu'à un repère tracé au préalable sur le conteneur qui correspond au garnissage du fond en tenant compte de l'enfoncement possible du fût dans la couche de mortier.

Après avoir laissé le mortier au repos pendant 30 min, la pale est libérée du système de levage et la coulée du mortier est poursuivie jusqu'à ras bord du conteneur. On peut ajouter encore un volume de mortier supplémentaire pour remplir la partie supérieure du conteneur car le contenu du fût s'est tassé durant sa mise en place. Toutefois, on dispose généralement un disque de plomb qui complète la radioprotection au-dessus du fût et assure un lestage de celui-ci.

Sur la figure 2, on a représenté le dispositif de stockage de déchets radioactifs ou toxiques, obtenu par le procédé de l'invention.

Sur cette figure, on voit que ce dispositif comprend un fût 1 contenant les déchets 3 sous la forme d'une dispersion de ces déchets dans une matrice minérale comprenant une phase de type straetlingite, monoboroaluminate de calcium et/ou ettringite boratée. Ce fût 1 est, si nécessaire, entouré d'une couche de mortier 5 disposée autour du fût, et une enveloppe externe 7 constituée par exemple par un conteneur en béton entoure la couche de mortier 5.

La structure de ce dispositif permet d'incorporer un volume élevé de déchets dans le fût 1 sans avoir de craintes particulières sur la diminution intrinsèque des performances mécaniques, à condition d'avoir un dosage en ciment suffisant pour permettre un effort de traction sur le fût 1 par l'intermédiaire de la pale perdue, lors de la disposition du fût 1 dans le conteneur 7.

Dans ce dispositif, la présence de la couche de mortier 5 disposée autour du fût 1 permet d'obtenir les propriétés mécaniques et d'assurer le confinement et la rétention des produits radioactifs ou toxiques. Généralement, l'épaisseur de cette couche 5 est d'au moins 10 cm.

La composition de ce mortier est la suivante :

- sable siliceux de 0 à 4 mm : 1170 kg/m$^3$,
- ciment CLC 45 : 650 kg/m$^3$,
- fumées de silice : 130 kg/m$^3$,
- argile smectique : 30 kg/m$^3$,
- eau + fluidifiant : 260 l/m$^3$.

Le fluidifiant utilisé est du type naphtalène sulfoné et les caractéristiques physiques du mortier frais sont les suivantes :

- temps d'écoulement au cône de Marsh (diamètre de 12,5 mm) : 100s,
- temps de prise : 6 h,
- densité : 2,24.

On réalise la coulée du mortier en deux étapes, puis on laisse durcir et on détermine les caractéristiques du produit finalement obtenu.

Les caractéristiques physiques du mortier durci sont les suivantes :

- retrait à 28 jours : < 400 μm/m (enceinte étanche),
- résistance à la compression à 28 jours : > 80 MPa,
- résistance à la flexion à 28 jours : > 10 MPa.

Les retraits et les résistances sont mesurées sur des éprouvettes prismatiques de 4x4x16 cm.

**Revendications**

**1.** Dispositif de stockage de déchets radioactifs ou toxiques, caractérisé en ce qu'il comprend un fût (1) contenant les déchets (3) sous forme d'une dispersion de ces déchets dans une matrice minérale comprenant des phases de type straetlingite, monoboroaluminate de calcium et/ou ettringite boratée.

**2.** Dispositif selon la revendication 1, caractérisé en ce qu'il comprend de plus une couche de mortier (5) disposée autour du fût (1), et une enveloppe externe (7) entourant la couche de mortier.

**3.** Dispositif selon la revendication 2, caractérisé en ce que la couche de mortier comprend du ciment, du sable siliceux, des fumées de silice et une argile smectique.

**4.** Dispositif selon l'une quelconque des revendications 2 et 3, caractérisé en ce que l'épaisseur de la couche de mortier est d'au moins 10 cm.

**5.** Dispositif selon l'une quelconque des revendications 2 à 4, caractérisé en ce que l'enveloppe externe est en béton.

**6.** Dispositif selon l'une quelconque des 1 à 5, caractérisé en ce que les déchets sont des résines échangeuses d'ions ou des concentrats liquides.

**7.** Procédé de conditionnement de déchets radioactifs ou toxiques pouvant contenir des ions borate dans une matrice solide à base de ciment en vue de leur stockage, caractérisé en ce qu'il consiste :

a) - à mélanger les déchets, en présence d'eau, avec du ciment alumineux, du ciment non alumineux et éventuellement un composé siliceux et/ou un composé contenant du bore en proportions telles que l'on forme un mélange donnant lieu à la cristallisation de phases minérales stables de type straetlingite, monoboroaluminate de calcium et/ou ettringite boratée, outre les hydrates classiques du ciment non alumineux, et

b) - à laisser durcir le mélange pour former la matrice solide comportant l'une au moins de ces phases.

**8.** Procédé selon la revendication 7, caractérisé en ce que l'on dispose ensuite autour du mélange durci une couche de mortier.

**9.** Procédé selon l'une quelconque des revendications 7 et 8, caractérisé en ce que les déchets radioactifs à conditionner sont des concentrats liquides boratés et en ce qu'on les mélange dans l'étape a) avec du ciment alumineux, du ciment non alumineux à base de clinker de Portland et un composé siliceux.

**10.** Procédé selon l'une quelconque des revendications 7 et 8, caractérisé en ce que dans l'étape a), on mélange les déchets avec de l'eau, du ciment alumineux, du ciment non alumineux à base de clinker de Portland, un composé siliceux et un composé contenant du bore.

**11.** Procédé selon l'une quelconque des revendications 7, 9 et 10, caractérisé en ce que dans l'étape a), les proportions sont telles que le rapport en poids eau/(ciment non alumineux + ciment alumineux + composé siliceux) est inférieur à 0,5.

12. Procédé selon la revendication 11, caractérisé en ce que le rapport en poids ciment non alumineux/ciment alumineux est dans la gamme de 1 à 20.

13. Procédé selon l'une quelconque des revendications 7 à 12, caractérisé en ce que le ciment non alumineux est choisi dans le groupe comprenant les ciments CPA, CPJ, CLK et CLC.

14. Procédé selon l'une quelconque des revendications 7 à 13, caractérisé en ce que le composé siliceux est choisi dans le groupe comprenant les pouzzolanes, les argiles, le métakaolin, le kieselgur, les fumées de silice, le quartz broyé, les gels de silice, les poudres de verre et le silicate de sodium.

15. Procédé selon l'une quelconque des revendications 7 et 10, caractérisé en ce que le composé de bore est l'acide borique, un borate ou du borax.

16. Procédé selon l'une quelconque des revendications 7 et 10, caractérisé en ce que dans l'étape a) on ajoute en mélange un agent fluidifiant pour ciment.

17. Procédé selon la revendication 16, caractérisé en ce que l'agent fluidifiant est un naphtalène sulfonate ou un composé de type mélamine.

18. Procédé selon la revendication 8, caractérisé en ce que la couche de mortier est formée à partir d'un mélange comprenant du ciment, du sable siliceux, des fumées de silice, une argile smectique et de l'eau.

19. Procédé selon la revendication 12, caractérisé en ce que l'argile smectique est une bentonite.

20. Procédé selon l'une quelconque des revendications 18 et 19, caractérisé en ce que le mélange comprend un agent fluidifiant.

21. Procédé selon l'une quelconque des revendications 7 à 10 et 16, caractérisé en ce que dans l'étape a), on mélange tout d'abord les déchets avec l'eau et éventuellement l'agent fluidifiant, le composé siliceux, une partie du ciment non alumineux, et/ou le composé contenant du bore, puis on ajoute le ciment alumineux et le ciment non alumineux.

22. Procédé selon l'une quelconque des revendications 7 à 10 et 16, caractérisé en ce que dans l'étape a), le rapport du volume réel des déchets au volume total (déchets + eau + agents fluidifiant + composé siliceux + composé contenant du bore + ciment alumineux + ciment Portland) est d'au plus 0,6.

**Claims**

1. Apparatus for the storage of radioactive or toxic waste, characterized in that it comprises a drum (1) containing the waste (3) in the form of a dispersion thereof in a mineral matrix incorporating phases of the straetlingite, calcium monoboroaluminate and/or borated ettringite type.

2. Apparatus according to claim 1, characterized in that it also comprises a mortar layer (5) placed around drum (1) and an outer envelope (7) surrounding the mortar layer.

3. Apparatus according to claim 2, characterized in that the mortar layer comprises cement, siliceous sand, fume silica and a smectic clay.

4. Apparatus according to either of the claims 2 and 3, characterized in that the mortar layer thickness is at least 10 cm.

5. Apparatus according to any one of the claims 2 to 4, characterized in that the outer envelope is of concrete.

6. Apparatus according to any one of the claims 1 to 5, characterized in that the waste is constituted by ion exchange resins or liquid concentrates.

**7.** Process for the conditioning of radioactive or toxic waste which can contain borate ions in a cement-based solid matrix with a view to the storage thereof, characterized in that it comprises:

a) mixing the waste, in the presence of water, with aluminous cement, non-aluminous cement and optionally a siliceous compound and/or a compound containing boron in proportions such that a mixture is formed, which gives rise to the crystallization of stable mineral phases of the type straetlingite, calcium monoboroaluminate and/or borated ettringite, apart from the standard hydrates of the non-aluminous cement, and

b) allowing the mixture to harden in order to form the solid matrix containing at least one of these phases.

**8.** Process according to claim 7, characterized in that a mortar layer is then placed around the hardened mixture.

**9.** Process according to either of the claims 7 and 8, characterized in that the radioactive waste to be conditioned is constituted by borated liquid concentrates and in that they are mixed in stage a) with aluminous cement, non-aluminous cement based on Portland clinker and a siliceous compound.

**10.** Process according to either of the claims 7 and 8, characterized in that in stage a), the waste is mixed with water, aluminous cement, non-aluminous cement based on Portland clinker, a siliceous compound and a compound containing boron.

**11.** Process according to any one of the claims 7, 9 - 10, characterized in that in stage a), the proportions are such that the weight ratio of water/(non-aluminous cement + aluminous cement + siliceous compound) is below 0.5.

**12.** Process according to claim 11, characterized in that the weight ratio of non-aluminous cement to aluminous cement is in the range 1 to 20.

**13.** Process according to any one of the claims 7 to 12, characterized in that the non-aluminous cement is chosen from the group including the cements CPA, CPJ, CLK and CLC.

**14.** Process according to any one of the claims 7 to 13, characterized in that the siliceous compound is chosen from the group including pozzuolanas, clays, metakaolin, kieselguhr, fume silica, ground quartz, silica gels, powders of glass and sodium silicate.

**15.** Process according to either of the claims 7 and 10, characterized in that the boron compound is boric acid, a borate or borax.

**16.** Process according to either of the claims 7 and 10, characterized in that in stage a) a cement fluidizing agent is added to the mixture.

**17.** Process according to claim 16, characterized in that the fluidizing agent is a naphthalene sulphonate or a melamine-type compound.

**18.** Process according to claim 8, characterized in that the mortar layer is formed from a mixture including cement, siliceous sand, fume silica, a smectic clay and water.

**19.** Process according to claim 12, characterized in that the smectic clay is a bentonite.

**20.** Process according to either of the claims 18 and 19, characterized in that the mixture comprises a fluidizing agent.

**21.** Process according to any one of the claims 7 to 10 and 16, characterized in that in stage a), the waste is firstly mixed with the water and optionally the fluidizing agent, the siliceous compound, part of the non-aluminous cement and/or the boron-containing compound, followed by the addition of the aluminous cement and the non-aluminous cement.

22. Process according to any one of the claims 7 to 10 and 16, characterized in that in stage a), the ratio of the real volume of the waste to the total volume (waste + water + fluidizing agents + siliceous compound + boron-containing compound + aluminous cement + Portland cement) is at the most 0.6.

**Patentansprüche**

1. Vorrichtung zur Lagerung radioaktiver oder toxischer Abfälle, dadurch gekennzeichnet, daß sie ein Faß (1) umfaßt, das die Abfälle (3) in Form einer Dispersion dieser Abfälle in einer mineralischen Matrix enthält, welche die Phasen vom Typ des Straetlingits, des Calciummonoboroaluminats und/oder des borhaltigen Ettringits umfaßt.

2. Vorrichtung gemäß Anspruch 1, dadurch gekennzeichnet, daß sie ferner eine um das Faß (1) angebrachte Mörtelschicht (5) und eine die Mörtelschicht umgebende äußere Hülle (7) enthält.

3. Vorrichtung gemäß Anspruch 2, dadurch gekennzeichnet, daß die Mörtelschicht Zement, Quarzsand, Quarzstäube und einen Walk-Ton enthält.

4. Vorrichtung gemäß einem der Ansprüche 2 und 3, dadurch gekennzeichnet, daß die Dicke der Mörtelschicht mindestens 10 cm beträgt.

5. Vorrichtung gemäß einem der Ansprüche 2 bis 4, dadurch gekennzeichnet, daß die äußere Hülle aus Beton ist.

6. Vorrichtung gemäß einem der Ansprüche 1 bis 5, dadurch gekennzeichnet, daß die Abfälle Ionenaustauscherharze oder flüssige Konzentrate sind.

7. Verfahren zur Konditionierung radioaktiver oder toxischer Abfälle, die Borat-Ionen enthalten können, in Hinblick auf ihre Lagerung in einer festen Matrix auf Zementbasis, dadurch gekennzeichnet, daß es darin besteht:
   a) - die Abfälle in Gegenwart von Wasser mit Tonerdezement, Nicht-Tonerdezement und gegebenenfalls einer Silikat- und/oder einer borhaltigen Verbindung in solchen Mengenverhältnissen zu vermischen, daß eine Mischung gebildet wird, die über die gewöhnlichen Hydrate des Nicht-Tonerdezements hinaus die Kristallisation von stabilen mineralischen Phasen vom Typ des Straetlingits, des Calciummonoboroaluminats und/oder des borhaltigen Ettringits gestattet, und
   b) - die Mischung hart werden zu lassen, um die feste Matrix zu bilden, die wenigstens eine dieser Phasen enthält.

8. Verfahren gemäß Anspruch 7, dadurch gekennzeichnet, daß man anschließend um die erhärtete Mischung eine Mörtelschicht anbringt.

9. Verfahren gemäß einem der Ansprüche 7 und 8, dadurch gekennzeichnet, daß die zu konditionierenden radioaktiven Abfälle borhaltige flüssige Konzentrate sind und daß sie im Schritt a) mit Tonerdezement,Nicht-Tonerdezement auf Portland-Klinker-Basis und einer Silikat-Verbindung gemischt werden.

10. Verfahren gemäß einem der Ansprüche 7 und 8, dadurch gekennzeichnet, daß die Abfälle im Schritt a) mit Wasser, Tonerdezement, Nicht-Tonerdezement auf Portland-Klinker-Basis, einer Silikat-Verbindung und einer borhaltigen Verbindung gemischt werden.

11. Verfahren gemäß einem der Ansprüche 7, 9 und 10, dadurch gekennzeichnet, daß im Schritt a) die Mengenverhältnisse so sind, daß das Gewichtsverhältnis des Wassers zur Gesamtmenge von Nicht-Tonerdezement, Tonerdezement und Silikat-Verbindung unter 0,5 liegt.

12. Verfahren gemäß Anspruch 11, dadurch gekennzeichnet, daß das Gewichtsverhältnis von Nicht-Tonerdezement zu Tonerdezement im Bereich von 1 bis 20 liegt.

13. Verfahren gemäß einem der Ansprüche 7 bis 12, dadurch gekennzeichnet, daß der Nicht-Tonerdezement aus der Gruppe gewählt wird, die die reinen Portlandzemente, die zusammengesetzten Portlandzemente, die Schlacken-Klinker-Zemente und die Schlacken-Flugaschen-Zemente umfaßt.

**14.** Verfahren gemäß einem der Ansprüche 7 bis 13, dadurch gekennzeichnet, daß die Silikat-Verbindung aus der Gruppe gewählt wird, die die Puzzolane, die Tone, Metakaolin, Kieselgur, die Quarzstäube, Quarzmehl, die Kieselgele, die Glaspulver und Natriumsilicat umfaßt.

**15.** Verfahren gemäß einem der Ansprüche 7 und 10, dadurch gekennzeichnet, daß die Borverbindung Borsäure, ein Borat oder Borax ist.

**16.** Verfahren gemäß einem der Ansprüche 7 und 10, dadurch gekennzeichnet, daß im Schritt a) in die Mischung ein Betonverflüssiger hinzugefügt wird.

**17.** Verfahren gemäß Anspruch 16, dadurch gekennzeichnet, daß der Betonverflüssiger ein Naphtalinsulfonat oder eine Verbindung von der Art des Melamins ist.

**18.** Verfahren gemäß Anspruch 8, dadurch gekennzeichnet, daß die Mörtelschicht gebildet wird aus einer Mischung, die Zement, Quarzsand, Quarzstäube, einen Walk-Ton und Wasser enthält.

**19.** Verfahren gemäß Anspruch 18, dadurch gekennzeichnet, daß der Walk-Ton ein Bentonit ist.

**20.** Verfahren gemäß einem der Ansprüche 18 und 19, dadurch gekennzeichnet, daß die Mischung einen Betonverflüssiger enthält.

**21.** Verfahren gemäß einem der Ansprüche 7 bis 10 und 16, dadurch gekennzeichnet, daß im Schritt a) zunächst die Abfälle mit Wasser und gegebenenfalls mit dem Betonverflüssiger, der Silikat-Verbindung, einem Teil des Nicht-Tonerdezements und/oder der borhaltigen Verbindung gemischt werden und dann der Tonerdezement und der Nicht-Tonerdezement zugefügt werden.

**22.** Verfahren gemäß einem der Ansprüche 7 bis 10 und 16, dadurch gekennzeichnet, daß im Schritt a) das Verhältnis des tatsächlichen Volumens der Abfälle zum Gesamtvolumen von Abfällen, Wasser, Betonverflüssiger, Silikat-Verbindung, borhaltiger Verbindung, Tonerdezement und Portlandzement höchstens 0,6 beträgt.

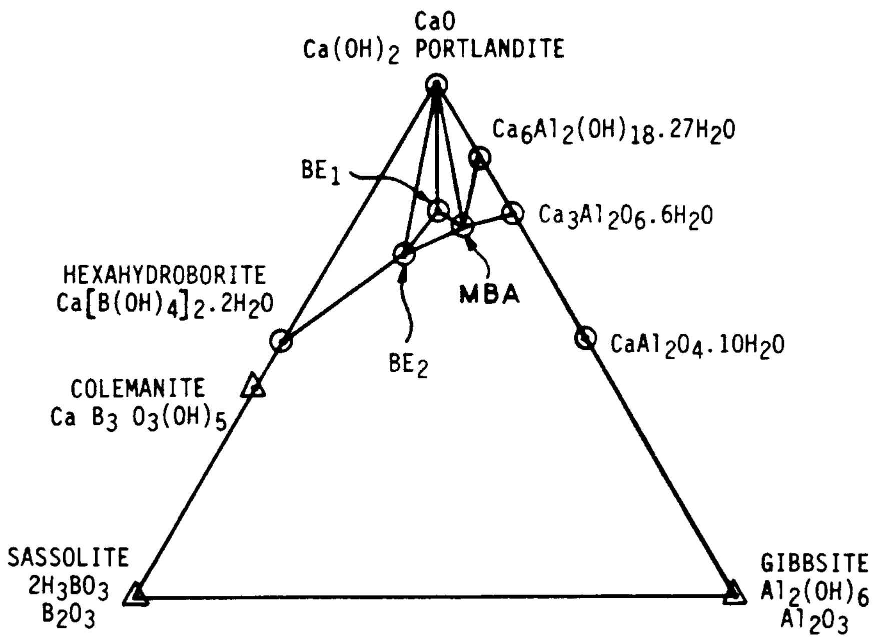
CaO
Ca(OH)2 PORTLANDITE
Ca6Al2(OH)18.27H2O
BE1
Ca3Al2O6.6H2O
MBA
HEXAHYDROBORITE
Ca[B(OH)4]2.2H2O
BE2
CaAl2O4.10H2O
COLEMANITE
Ca B3 O3(OH)5
SASSOLITE
2H3BO3
B2O3
GIBBSITE
Al2(OH)6
Al2O3

FIG. 1

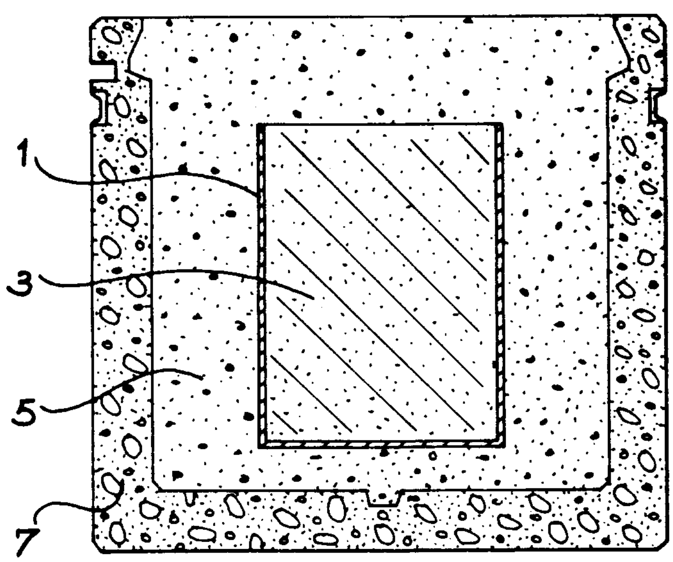
1
3
5
7

FIG. 2